# EUROPEAN PATENT APPLICATION

(11) **EP 4 636 101 A1**
(43) Date of publication of application: **22.10.2025**
(21) Application number: 23903758.3
(22) Date of filing: 07.11.2023
(51) Int. Cl.: C22B 26/12, C22B 1/00, C22B 3/20

(54) **METHOD FOR RECOVERING LITHIUM FROM LITHIUM ORE**

(30) Priority: 15.12.2022 KR 20220176063
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: HAN, Gi-Chun, Cheongju-si, Chungcheongbuk-do 28663 (KR); CHOI, Sanghyeon, Pohang-si, Gyeongsangbuk-do 37767 (KR); JEUNG, Kee Uek, Pohang-si, Gyeongsangbuk-do 37656 (KR); KIM, Seung Goo, Pohang-si, Gyeongsangbuk-do 37757 (KR); KWON, Young Su, Pohang-si, Gyeongsangbuk-do 37670 (KR); LEE, Seung Seok, Pohang-si, Gyeongsangbuk-do 37834 (KR); KIM, Hyun Soo, Pohang-si, Gyeongsangbuk-do 37667 (KR); LEE, Sangon, Yongin-si, Gyeonggi-do 17079 (KR)
(74) Representative: Pfenning, Meinig & Partner mbB
(86) International application number: PCT/KR2023/017730
(87) International publication number: WO 2024/128555

(57) **Abstract**

These embodiments can provide a method for recovering lithium, comprising the steps of preparing a lithium ore powder obtained by grinding a lithium ore, mixing the lithium ore powder and a solvent to prepare a slurry, introducing the slurry into a reactor to perform a hydrothermal reaction, and separating the product obtained from the heating step.

## Description

### FIELD OF THE INVENTION

The present embodiments relate to a method for recovering lithium from lithium ore, specifically to a method involving mixing lithium ore with an additive and water, followed by a hydrothermal reaction to recover lithium.

### DESCRIPTION OF THE RELATED ART

Lithium-containing ores that are primarily found in nature are pegmatite ores. In their natural state, lithium is not leached by inorganic acids such as sulfuric acid, requiring conversion to a form that is easily leachable before leaching. The main method for converting lithium into an easily leachable form is heat treatment at 900-1,100°C. Even after this heat treatment, which converts the form of lithium, it is not easily leached by inorganic acids at room temperature, necessitating heating to high temperatures or mixing with strong acids like sulfuric acid, followed by a roasting process.

Using sulfuric acid inevitably requires an excess of acid, leading to the co-leaching of impurities along with lithium. Most impurity elements precipitate in the alkaline region, necessitating additional processes for impurity removal. Additionally, the primary forms of industrial lithium salts are lithium carbonate or lithium hydroxide, which precipitate in the alkaline region, requiring alkaline substances to convert the acidic leachate to the alkaline region.

Thus, the method for recovering lithium from lithium ore requires high-energy processes such as calcination/roasting, and the recovery of lithium salts used industrially from acidic leachate requires alkalis. Such acid leaching methods consume a lot of energy and involve complex processes, increasing manufacturing costs. Moreover, the use of strong acids like sulfuric acid and large amounts of alkaline substances in the lithium extraction process poses environmental concerns.

Additionally, due to high energy requirements and significant carbon dioxide emissions, there is a need for the development of an efficient and environmentally friendly stable method for lithium recovery.

### SUMMARY OF THE INVENTION

### TECHNICAL PROBLEM

An embodiment of the present invention aims to provide an improved method for recovering lithium from lithium ore.

### TECHNICAL SOLUTION

The method for recovering lithium according to an embodiment of the present invention may include: preparing a lithium ore powder obtained by grinding a lithium ore; mixing the lithium ore powder with a solvent to prepare a slurry; introducing the slurry into a reactor to perform a hydrothermal reaction; and separating the product obtained from the hydrothermal reaction.

The lithium ore powder obtained in the step of preparing lithium ore powder can be mixed with a solvent to prepare a slurry without undergoing any treatment that causes a phase change.

The step of mixing the lithium ore powder with a solvent to prepare a slurry involves using water as the solvent and not adding an acid.

The step of introducing the slurry into a reactor to perform a hydrothermal reaction can be conducted at a temperature range of 200°C to 270°C.

Additionally, the step of introducing the slurry into a reactor to perform a hydrothermal reaction can be conducted for 1 to 3 hours.

Meanwhile, the reactor is a continuous reactor.

The step of mixing the lithium ore powder with a solvent to prepare a slurry can involve additionally mixing an additive to prepare the slurry.

The additive can include one or more selected from alkali metal compounds or alkaline earth metal compounds, specifically including one or more selected from NaOH, Na₂CO₃, NaHCO₃, NaCl, Na₂SO₄, KOH, K₂CO₃, KHCO₃, KCl, K₂SO₄, Ca(OH)₂, CaO, Ca(NO₃)₂, CaSO₄, Mg(OH)₂, MgO, Mg(NO₃)₂, MgSO₄, or CaCO₃.

Additionally, the additive can be mixed in a range of 10wt% to 60wt% based on the weight of the lithium ore powder.

The step of mixing the lithium ore powder with a solvent to prepare a slurry can involve additionally mixing an auxiliary additive along with the additive to prepare the slurry.

The auxiliary additive can be a compound containing one or more metal elements selected from Al or Ca, specifically including one or more selected from Al(OH)₃, Al(NO₃)₃, Al₂(SO₄)₃, AlCl₃, Ca(OH)₂, Ca(NO₃)₂, CaSO₄ and its hydrates, or CaCl₂.

The auxiliary additive can be mixed in a range of 5wt% to 40wt% based on the weight of the lithium ore powder.

In the step of preparing a lithium ore powder obtained by grinding a lithium ore, the lithium ore powder can include one or more selected from Petalite, Spodumene, Lepidolite, Hectorite, Eucryptite, Jardarite, Zinnwaldite, or Amblygonite, and specifically, the lithium ore powder can be Petalite powder.

### ADVANTAGEOUS EFFECTS

According to an embodiment of the present invention, an improved method for recovering lithium from lithium ore can be provided. Specifically, an environmentally friendly method for recovering lithium that can efficiently recover lithium without using strong acids can be provided.

Additionally, a lithium recovery method with reduced energy consumption can be provided.

### BRIEF DESCRIPTION OF THE DRAWINGS

FIG. 1 schematically illustrates a method for recovering lithium according to an embodiment of the present invention.
FIG. 2 shows the XRD analysis results of Petalite powder and Spodumene powder.
FIG. 3 shows the XRD analysis results of the final solid material produced according to Examples 1 and 2.
FIG. 4 shows the XRD analysis results of the final solid material produced according to Comparative Example 3.
FIG. 5 shows the XRD analysis results of the final solid material produced according to Comparative Example 4 and Spodumene powder heat-treated at 1,050°C.

### DETAILED DESCRIPTION OF THE EMBODIMENTS

In the description of the present invention, terms such as first, second, and third are used to describe various parts, components, regions, layers, and/or sections, but are not limited thereto. These terms are only used to distinguish one part, component, region, layer, or section from another part, component, region, layer, or section. Thus, a first part, component, region, layer, or section discussed below may be referred to as a second part, component, region, layer, or section without departing from the scope of the present invention.

The terminology used herein is for the purpose of describing particular embodiments only and is not intended to limit the invention. The singular forms used herein include plural forms as well unless the context clearly indicates otherwise. The term "comprising/including/involving/containing/having" as used in the specification specifies the presence of stated features, regions, integers, steps, actions, elements, and/or components, but does not preclude the presence or addition of one or more other features, regions, integers, steps, actions, elements, components, and/or groups thereof.

Unless otherwise defined, all terms used herein, including technical and scientific terms, have the same meaning as commonly understood by one of ordinary skill in the art to which this invention belongs. Terms defined in commonly used dictionaries should be interpreted as having a meaning that is consistent with their meaning in the context of the relevant art and the present disclosure, and should not be interpreted in an idealized or overly formal sense unless expressly so defined.

Hereinafter, embodiments of the present invention will be described in detail. However, these are provided as examples only, and are not intended to limit the present invention, which is defined only by the scope of the claims that follow.

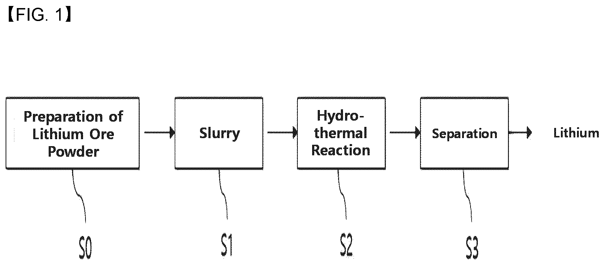

FIG. 1 schematically illustrates a method for recovering lithium according to one embodiment of the present invention.

Referring to FIG. 1, the method for recovering lithium according to one embodiment of the present invention may include a step S0 of preparing a lithium ore powder, a slurry preparation step S1, a hydrothermal reaction step S2, and a separation step S3.

First, the step S0 of preparing a lithium ore powder may involve obtaining a lithium ore powder by grinding a lithium ore. In the present invention, after grinding the lithium ore, the lithium ore that has not undergone a phase change is used as a raw material for lithium recovery. The lithium ore may be a mineral containing lithium and may include one or more selected from Petalite, Spodumene, Lepidolite, Hectorite, Eucryptite, Jardarite, Zinnwaldite, or Amblygonite.

The slurry preparation step S1 may involve mixing the lithium ore powder obtained by grinding the lithium ore with a solvent to prepare a slurry. In this step, the lithium ore powder obtained from the step of preparing lithium ore powder is mixed with a solvent without undergoing any treatment that causes a phase change to prepare a slurry.

In the present invention, the solvent may be pure water, such as distilled water. Additionally, no acid substances, such as sulfuric acid, are added to the solvent. This provides the advantage of recovering lithium in an environmentally friendly manner.

Meanwhile, in the slurry preparation step S1, an additive may be added to prepare the slurry. The additive may include one or more selected from alkali metal compounds or alkaline earth metal compounds, specifically one or more selected from alkali metal oxides, alkali metal hydroxides, alkali metal salts, alkaline earth metal oxides, alkaline earth metal hydroxides, or alkaline earth metal salts. More specifically, the additive may include one or more selected from NaOH, Na₂CO₃, NaHCO₃, NaCl, Na₂SO₄, KOH, K₂CO₃, KHCO₃, KCI, K₂SO₄, Ca(OH)₂, CaO, Ca(NO₃)₂, CaSO₄, Mg(OH)₂, MgO, Mg(NO₃)₂, MgSO₄, or CaCO₃.

Based on the weight of the lithium ore powder, the additive may be mixed in a range of 10wt% to 60wt%, and more specifically, in a range of 30wt% to 60wt%. Mixing the additive within this range is advantageous for efficiently recovering lithium while minimizing the generation of pollutants in subsequent processes.

Additionally, an auxiliary additive may be mixed along with the additive. The auxiliary additive may be a compound containing one or more metal elements selected from Al or Ca. Specifically, it may include one or more selected from Al(OH)₃, Al(NO₃)₃, Al₂(SO₄)₃, AlCl₃, Ca(OH)₂, Ca(NO₃)₂, CaSO₄ and its hydrates, or CaCl₂. The auxiliary additive may be mixed in a range of 5wt% to 40wt% based on the weight of the lithium ore powder.

In the slurry preparation step, the lithium ore powder and the additive may be mixed with water to prepare a slurry, and the mixing amount of the lithium ore powder per volume of water may be in the range of 50g/L to 400g/L, and more specifically, in the range of 50g/L to 300g/L. Mixing the lithium ore powder and water within this range is advantageous for effectively conducting the subsequent hydrothermal reaction and efficiently extracting lithium.

The hydrothermal reaction step S2 may involve introducing the prepared slurry into a reactor to perform a hydrothermal reaction. At this time, the hydrothermal reaction temperature may be 200°C or higher, and more specifically, in the range of 200°C to 270°C. The hydrothermal reaction may be conducted under pressure conditions above the vapor pressure generated by heating. In one embodiment of the present invention, the hydrothermal reaction may be conducted for 0.5 hours to 5 hours, and more specifically, for 1 hour to 3 hours. Performing the hydrothermal reaction for such a duration has the advantage of improving lithium leaching efficiency while reducing energy consumption.

Additionally, the hydrothermal reaction reactor may be a continuous reactor. By applying a continuous reactor in this manner, there is an advantage of reducing energy usage and improving overall productivity.

The separation step S3 may involve separating the solid and liquid phases generated in the hydrothermal reaction step, and the separation method is not particularly limited as long as it can effectively separate the solid and liquid materials.

### DETAILED DESCRIPTION OF THE EMBODIMENTS

Hereinafter, embodiments of the present invention will be described in detail. It should be noted, however, that the following embodiments are provided for illustrative purposes only and are not intended to limit the scope of the invention. The scope of the invention is defined solely by the appended claims.

### (Preparation of Lithium Ore Powder)

Petalite ore and Spodumene ore were prepared as lithium ore powders obtained by pulverizing lithium ore. The major elemental compositions were analyzed using inductively coupled plasma (ICP) spectroscopy, and the results are summarized in Table 1 below.

**(Table 1)**

| | Element Content (wt%) | | | | | |
|---|---|---|---|---|---|---|
| | Li | Al | Si | Mg | Ca | Na |
| Petalite ore | 2.12 | 8.92 | 34.0 | 0.021 | 0.065 | 0.021 |
| Spodumene ore | 2.69 | 13.2 | 29.4 | 0.16 | 0.79 | 0.50 |

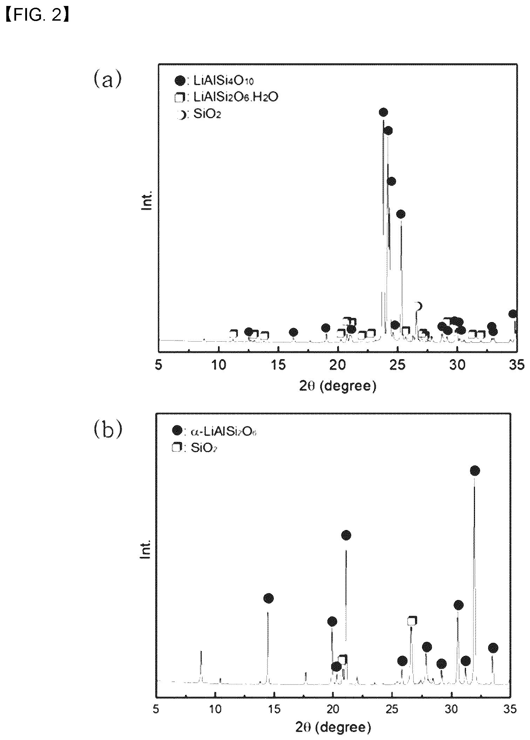

FIG. 2 shows the X-ray diffraction (XRD) analysis results of the Petalite ore powder and Spodumene ore powder. Specifically, FIG. 2(a) illustrates the XRD result of the Petalite ore powder, and FIG. 2(b) illustrates the XRD result of the Spodumene ore powder.

Referring to FIG. 2, it can be confirmed that the primary component of the Petalite ore is LiAlSi₄O₁₀, and the primary component of the Spodumene ore is LiAlSi₂O₆.

### (Example 1)

200 g of the prepared Petalite ore powder and 100 g of Na₂CO₃ were added to 1 L of distilled water and stirred to prepare a slurry. The slurry was charged into a pressure reactor, heated to 250°C, and maintained at that temperature for 2 hours. During this time, the slurry in the pressure reactor was stirred at a speed of 350 rpm. After the reaction was completed, the mixture was cooled to room temperature and subjected to solid-liquid separation. The resulting cake was washed with distilled water in an amount corresponding to 5 times the weight of the cake, and then dried to constant weight at 45°C. The obtained solid was then analyzed.

### (Example 2)

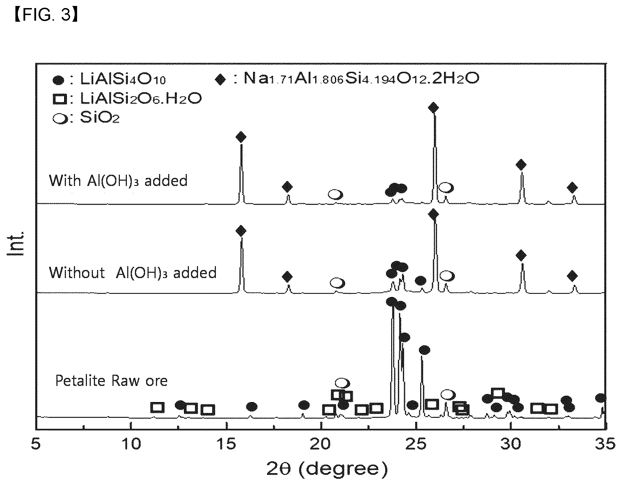

Except for additionally mixing 6 g of Al(OH)₃-corresponding to 6% by weight relative to the Petalite ore powder-during the slurry preparation step, the procedure was carried out in the same manner as in Example 1. The resulting solid after drying was analyzed. FIG. 3 shows the XRD analysis results of the final solid products obtained in Examples 1 and 2. Referring to FIG. 3, it can be confirmed that the final solid product in both Example 1 and Example 2 is Na_{1.71}Al_{1.806}Si_{4.194}O₁₂·2.16H₂O. Meanwhile, the XRD quantitative analysis results and lithium recovery rates of the final solids obtained in Examples 1 and 2 are summarized in Table 2 below.

**(Table 2)**

| | XRD Quantitative Analysis (wt%) | | | | | Li recovery rate (%) |
|---|---|---|---|---|---|---|
| | Na_{1.71}Al_{1.806}Si_{4.194}O₁₂.2.16H₂O | SiO₂ | LiAlSi₄O₁₀ | Etc. | Li contents | |
| Example 1 | 73.9 | 5.1 | 16.3 | 4.7 | 0.50 | 76% |
| Example 2 | 83.5 | 5.8 | 4.5 | 6.2 | 0.13 | 93% |

The lithium recovery rate was calculated as the percentage difference between the lithium content in the starting ore and the lithium content remaining in the final solid product, based on the lithium content in the raw ore. Referring to Table 2, it can be confirmed that the lithium recovery rates for Examples 1 and 2 are 76% and 93%, respectively.

### (Comparative Example 1)

100 g of the prepared Petalite ore powder was added to 1 L of 5% sulfuric acid and stirred at room temperature for 1 hour, followed by solid-liquid separation. The lithium concentration in the resulting solution was measured using ICP. The Li concentration in the solution was measured to be 10 ppm, indicating that only 0.5% of the lithium contained in the initial Petalite ore was dissolved. Therefore, it can be understood that lithium contained in Petalite cannot be efficiently leached using sulfuric acid under ambient temperature conditions.

### (Comparative Example 2)

Petalite ore was heat-treated at 1,100°C for 1 hour and cooled. The resulting calcined Petalite ore was pulverized to obtain calcined Petalite ore powder. 100 g of the calcined Petalite ore powder was placed in a crucible, and 19.9 g of concentrated sulfuric acid (98%) was added thereto. The mixture was stirred sufficiently to ensure uniform mixing. The resulting mixture was introduced into a pressure reactor and heat-treated at 250°C for 1 hour, followed by cooling to room temperature. Then, the mixture was combined with distilled water at a weight ratio of 1:2 (solid:liquid) and stirred for 1 hour at room temperature. Subsequently, the solid and liquid phases were separated, and the lithium concentration in the liquid phase was measured. The separated cake was washed five times with distilled water at a quantity five times the weight of the cake, then dried to constant weight at 45°C. The final solid was analyzed.

The lithium concentration in the liquid phase was found to be 7.7 g/L, indicating a lithium recovery rate of approximately 90%.

In other words, in Comparative Example 1, lithium was hardly leached from Petalite using sulfuric acid at room temperature. However, in Comparative Example 2, when Petalite was heat-treated at 1,100°C and subsequently subjected to sulfuric acid roasting at 250°C, a significant amount of lithium was leached. Therefore, as shown in Comparative Example 2, when Petalite is subjected to high-temperature calcination at 1,100°C followed by acid treatment with sulfuric acid at 250°C, lithium can be effectively leached through high-energy acid treatment.

### (Comparative Example 3)

89 g of the prepared Spodumene ore powder and Na₂CO₃, in an amount corresponding to 7.0 equivalents of the lithium content in the Spodumene ore (based on the reaction: LiAlSi₂O₆ + Na₂CO₃ + H₂O → NaAlSi₂O₆·H₂O + Li₂CO₃), were added to 400 mL of distilled water and mixed to form a slurry.

The slurry was charged into a pressure reactor, heated to 220°C, and maintained for 2 hours.

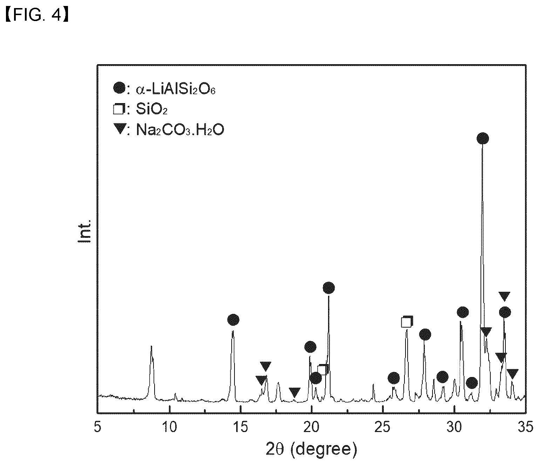

During this time, the slurry in the pressure reactor was stirred at 350 rpm. After completion of the reaction, the mixture was cooled to room temperature and subjected to solid-liquid separation. The resulting cake was washed with distilled water in an amount five times the weight of the cake, and dried to constant weight at 45°C. The resulting solid was analyzed. FIG. 4 illustrates the XRD analysis results of the final solid product obtained in Comparative Example 3. Referring to FIG. 4, it can be confirmed that Spodumene ore remained largely unreacted in Comparative Example 3.

### (Comparative Example 4)

The prepared Spodumene ore powder was heat-treated at 1,050°C for 1 hour. Thereafter, 89 g of the heat-treated Spodumene ore powder and Na₂CO₃, in an amount corresponding to 2.0 equivalents of the lithium content in the Spodumene ore (based on the reaction: LiAlSi₂O₆ + Na₂CO₃ + H₂O → NaAlSi₂O₆·H₂O + Li₂CO₃), were added to 400 mL of distilled water and mixed to prepare a slurry.

The slurry was charged into a pressure reactor, heated to 220°C, and maintained at that temperature for 2 hours.

During the reaction, the slurry in the reactor was stirred at a speed of 350 rpm. After completion of the reaction, the mixture was cooled to room temperature and subjected to solid-liquid separation. The resulting cake was washed with distilled water in an amount five times the weight of the cake, and then dried to constant weight at 45°C. The final solid was analyzed.

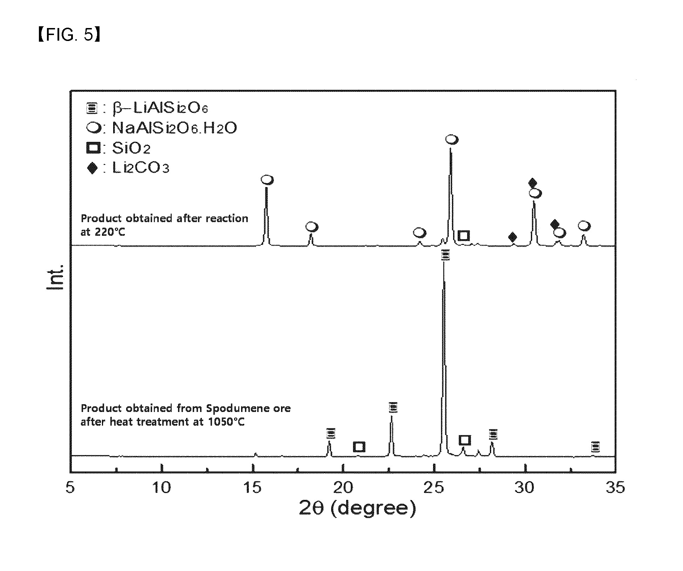

FIG. 5 shows the XRD analysis results of both the final solid product obtained in Comparative Example 4 and the Spodumene ore powder heat-treated at 1,050°C. Referring to FIG. 5, it can be seen that heat treatment of the Spodumene ore at 1,050°C resulted in the formation of β-spodumene (β-LiAlSi₂O₆). The solid product obtained after the reaction primarily consisted of NaAlSi₂O₆, SiO₂, and Li₂CO₃, and the original Spodumene phase (LiAlSi₂O₆) was no longer observed. Thus, it can be concluded that β-spodumene (β-LiAlSi₂O₆) reacted to form NaAlSi₂O₆ and Li₂CO₃. Accordingly, when Spodumene ore is subjected to high-temperature heat treatment at 1,100°C followed by sulfuric acid treatment at 250°C, lithium in the Spodumene ore can be effectively leached via high-energy acid treatment.

The present invention is not limited to the foregoing embodiments and may be implemented in various other forms. Those skilled in the art to which the invention pertains will appreciate that the invention can be carried out in other specific forms without departing from the spirit or essential features of the invention. Therefore, it should be understood that the embodiments described above are merely illustrative and not restrictive in any respect.

## Claims

1. A method for recovering lithium, comprising:
preparing a lithium ore powder obtained by grinding a lithium ore;
mixing the lithium ore powder with a solvent to prepare a slurry;
introducing the slurry into a reactor to perform a hydrothermal reaction; and
separating the product obtained from the hydrothermal reaction,
wherein the lithium ore powder obtained in the step of preparing lithium ore powder is mixed with a solvent to prepare a slurry without undergoing any treatment that causes a phase change.

2. The method for recovering lithium of claim 1, wherein:
the step of mixing the lithium ore powder with a solvent to prepare a slurry involves using water as the solvent and not adding an acid.

3. The method for recovering lithium of claim 1, wherein:
the step of introducing the slurry into a reactor to perform a hydrothermal reaction is conducted at a temperature range of 200°C to 270°C.

4. The method for recovering lithium of claim 1, wherein:
the step of introducing the slurry into a reactor to perform a hydrothermal reaction is conducted for 1 hour to 3 hours.

5. The method for recovering lithium of claim 1, wherein:
the reactor is a continuous reactor.

6. The method for recovering lithium of claim 1, wherein:
the step of mixing the lithium ore powder with a solvent to prepare a slurry involves additionally mixing an additive to prepare the slurry.

7. The method for recovering lithium of claim 6, wherein:
the additive includes one or more selected from alkali metal compounds or alkaline earth metal compounds.

8. The method for recovering lithium of claim 7, wherein:
the additive includes one or more selected from NaOH, Na₂CO₃, NaHCO₃, NaCl, Na₂SO₄, KOH, K₂CO₃, KHCO₃, KCI, K₂SO₄, Ca(OH)₂, CaO, Ca(NO₃)₂, CaSO₄, Mg(OH)₂, MgO, Mg(NO₃)₂, MgSO₄, or CaCO₃.

9. The method for recovering lithium of claim 7, wherein:
the additive is mixed in a range of 10wt% to 60wt% based on the weight of the lithium ore powder.

10. The method for recovering lithium of claim 6, wherein:
the step of mixing the lithium ore powder with a solvent to prepare a slurry involves additionally mixing an auxiliary additive along with the additive to prepare the slurry.

11. The method for recovering lithium of claim 10, wherein:
the auxiliary additive is a compound containing one or more metal elements selected from Al or Ca.

12. The method for recovering lithium of claim 11, wherein:
the auxiliary additive includes one selected from Al(OH)₃, Al(NO₃)₃, Al₂(SO₄)₃, AlCl₃, Ca(OH)₂, Ca(NO₃)₂, CaSO₄ and its hydrates, or CaCl₂.

13. The method for recovering lithium of claim 11, wherein:
the auxiliary additive is mixed in a range of 5wt% to 40wt% based on the weight of the lithium ore powder.

14. The method for recovering lithium of claim 1, wherein:
in the step of preparing a lithium ore powder obtained by grinding a lithium ore, the lithium ore powder includes one or more selected from Petalite, Spodumene, Lepidolite, Hectorite, Eucryptite, Jardarite, Zinnwaldite, or Amblygonite.

15. The method for recovering lithium of claim 14, wherein:
the lithium ore powder is Petalite powder.
